# FASCICULE DE BREVET EUROPEEN

(11) **EP 1 728 692 B1**
(45) Date de publication et mention de la délivrance du brevet: **02.09.2009**
(21) Numéro de dépôt: 06300549.0
(22) Date de dépôt: 01.06.2006
(51) Int. Cl.: B60R 22/26, B60N 2/06

(54) **Siège mobile pour véhicule automobile intégrant un système de ceinture de sécurité**
Bewegbarer Sitz für ein Kraftfahrzeug mit einem Sicherheitssystem
Movable seat for a motor vehicle with a seat belt system

(30) Priorité: 02.06.2005 FR 0551483
(43) Date de publication de la demande: 06.12.2006
(73) Titulaire: RENAULT S.A.S., 92100 Boulogne Billancourt (FR)
(72) Inventeur: Larsonneur, Jean-François, 78100 Saint Germain en Laye (FR); Mercier, Cédric, 91830 Le Coudray Montceaux (FR)

(56) Documents cités:
- EP-A- 1 266 804
- FR-A- 2 645 810
- US-A- 4 915 438
- PATENT ABSTRACTS OF JAPAN vol. 2003, no. 12, 5 décembre 2003 (2003-12-05) & JP 2004 352135 A (T S TEC KK), 16 décembre 2004 (2004-12-16) & US 2005/134099 A1 (MASUTANI EIJI) 23 juin 2005 (2005-06-23)

## Description

### DOMAINE TECHNIQUE

La présente invention concerne un siège mobile, plus particulièrement destiné à un véhicule automobile, intégrant un système de ceinture de sécurité. Ce système de ceinture de sécurité est utilisé pour un siège qui peut être déplacé selon les directions longitudinale et transversale, par rapport à l'axe longitudinal du véhicule automobile.

La mobilité des sièges permet avantageusement de pouvoir adopter de nombreuses configurations à l'intérieur du volume de l'habitacle d'un véhicule automobile. Cette mobilité des sièges s'adresse principalement aux sièges pour les passagers arrières. Dans le cas d'un véhicule classique, l'habitacle possède une unique rangée de sièges arrières. Dans le cas d'un véhicule de type break, monospace ou utilitaire, l'habitacle peut posséder deux rangées de sièges arrières.

Par leur mobilité transversale, deux sièges sont aptes à occuper une position rapprochée, dans laquelle ils sont par exemple latéralement sensiblement en contact l'un avec l'autre. Le véhicule dont les sièges sont adaptés de cette manière possède une configuration arrière à deux ou quatre places, en fonction du nombre de rangées de sièges. A contrario, les mêmes deux sièges sont ainsi aptes à occuper une position écartée, dans laquelle l'espace formé entre eux peut par exemple servir à intercaler un siège supplémentaire. Le véhicule dont les sièges sont adaptés de cette manière possède alors une configuration arrière à trois ou six places, en fonction du nombre de rangées de sièges.

Plusieurs réalisations visent à permettre la mobilité d'un siège arrière dans les directions longitudinale et transversale du véhicule automobile. De manière connue, un siège mobile est monté sur un premier support, qui possède une mobilité dans la direction transversale du véhicule. Le premier support est lui-même monté sur un deuxième support, qui possède une mobilité dans la direction longitudinale, mais qui est immobile dans la direction transversale du véhicule du véhicule.

### ÉTAT DE LA TECHNIQUE ANTÉRIEURE

Pour garantir la sécurité des occupants, tous les sièges de véhicules automobiles sont munis de systèmes de ceintures de sécurité, conformément aux normes actuellement en vigueur. Des tests sont connus sous la dénomination « crash-test Euro-NCAP » et attribuent des notes aux véhicules, en fonction des résultats obtenus liés à la sécurité. Les systèmes de ceinture de sécurité sont ainsi évalués avec la présence de mannequins standardisés subissant les chocs. De cette manière, les défauts éventuels de ces ceintures sont repérés, puis corrigés.

De manière habituelle, un système de ceinture de sécurité comprend une sangle, dont la première des extrémités est fixée à un premier point d'ancrage supérieur se présentant sous la forme d'un enrouleur. L'enrouleur est le plus souvent associé à divers mécanismes d'enroulement et de déroulement libre, de mise sous tension et de blocage, de cette sangle en cas de chocs. Pour éviter toute gêne, le premier point d'ancrage supérieur est situé à droite dans la paroi latérale du véhicule, pour les passagers assis à droite, et à gauche dans la paroi latérale du véhicule, pour les passagers assis à gauche et pour le conducteur.

La deuxième des extrémités de la sangle est fixée à un deuxième point d'ancrage inférieur situé du même côté que le premier point d'ancrage supérieur, c'est-à-dire dans la paroi latérale droite du véhicule ou dans la partie inférieure droite du siège, pour les passagers assis à droite, et dans la paroi latérale gauche du véhicule ou dans la partie inférieure gauche du siège, pour les passagers assis à gauche et pour le conducteur. Pour permettre un ajustement en fonction de la corpulence du passager, le deuxième point d'ancrage présente un axe autorisant un libre pivotement de la sangle dans un plan sensiblement vertical.

Le troisième point d'ancrage inférieur est constitué par une gâche, également appelée pédoncule, formant une pièce femelle, recevant un pêne, formant une pièce mâle. Le pêne peut être rentré, puis sorti à volonté hors de la gâche par simple appui sur un déclencheur. La sangle traverse le corps du pêne, de manière à pouvoir coulisser librement. Le troisième point d'ancrage inférieur est situé du côté opposé au premier point d'ancrage supérieur et au deuxième point d'ancrage inférieur, c'est-à-dire dans la partie gauche du siège, pour les passagers assis à droite, et dans la partie droite du siège, pour les passagers assis à gauche et pour le conducteur.

Lorsque le passager est assis, la sangle descend à partir du premier point d'ancrage supérieur en direction du troisième point d'ancrage inférieur, constituant un maintien du buste, en travers de la poitrine du passager. La sangle passe par le corps du pêne, ce dernier étant accroché à la gâche. La sangle rejoint enfin le deuxième point d'ancrage, constituant un maintien ventral.

De manière connue, le système de ceinture de sécurité divulgué présente une configuration embarquée. En effet, le siège se déplace dans plusieurs directions, et présente un premier point d'ancrage supérieur pour l'une des extrémités d'une sangle, qui est solidarisé au niveau de la partie supérieure du dossier. Le système de ceinture subit les mêmes déplacements que ceux s'appliquant au siège. Ceci sous-entend que les deuxième et troisième points d'ancrage inférieurs sont prévus sensiblement au niveau de l'assise du siège.

### EXPOSÉ DE L'INVENTION

Un problème principal que se propose de résoudre l'invention consiste à mettre au point un siège automobile, dont le système de ceinture de sécurité permet une bonne retenue du passager suite aux chocs, qu'il peut subir. Un deuxième problème est de réaliser un système de ceinture de sécurité adapté à un siège, qui est apte à être déplacé dans la direction longitudinale et dans la direction transversale du véhicule. Un troisième problème est de rendre les deuxième et/ou troisième points d'ancrage inférieurs d'un système de ceinture de sécurité suffisamment résistants pour absorber les chocs transférés à la sangle par le passager en cas d'accidents. Un autre problème encore est celui de réussir d'adéquation entre la capacité d'avoir un siège à la fois mobile longitudinalement et transversalement, et la solidité des points d'ancrage d'un système de ceinture de sécurité.

L'invention concerne donc un siège mobile, destiné à un véhicule automobile, comprenant un dossier et une assise. De manière connue, le siège est monté sur un premier support, apte à être déplacé dans une direction transversale du véhicule. Le premier support est lui-même monté sur un deuxième support, ce dernier étant apte à être déplacé dans une direction longitudinale du véhicule et étant immobile dans la direction transversale du véhicule. Le siège intègre un système de ceinture de sécurité, présentant une sangle. L'une des extrémités de la sangle est fixée à un premier point d'ancrage à enrouleur, solidarisé au niveau de la partie supérieure du dossier. L'autre des extrémités de la sangle est fixée à un deuxième point d'ancrage, Le système de ceinture de sécurité comprend en outre un pêne, dont le corps est traversé de manière coulissante par la sangle et est prévu pour être reçu de manière libérable dans une gâche, formant un troisième point d'ancrage.

Conformément à un aspect de la présente invention, le siège est caractérisé en ce que l'un au moins des deuxième et troisième points d'ancrage est solidarisé au niveau du deuxième support apte à être déplacé dans une direction longitudinale du véhicule.

Autrement dit, le ou les points fixes inférieurs de la ceinture, embarquée sur le siège grâce au premier point d'ancrage supérieur, sont déplacés sur une partie du siège qui n'est pas mobile transversalement. En déplaçant le ou les points d'ancrage inférieurs vers une pièce ne pouvant être que déplacée que longitudinalement, les efforts seront répartis de façon à éviter un arrachement d'un ou de plusieurs des trois points d'ancrage. Les chocs vont être encaissés par une pièce plus résistante et plus rapprochée du plancher du véhicule. Les forces importantes s'exerçant sur le passager lors d'un accident vont être retransmises plus directement au plancher du véhicule, par l'intermédiaire de la sangle et du ou des points d'ancrage inférieurs.

Dans une première forme de réalisation avantageuse, le deuxième point d'ancrage peut être solidarisé au niveau du deuxième support, c'est-à-dire celui mobile longitudinalement. Dans une deuxième forme de réalisation avantageuse, qui peut le cas échéant se rajouter à la forme de réalisation précédente, la gâche formant le troisième point d'ancrage peut être solidarisée au niveau du deuxième support.

Afin de favoriser la circulation de la sangle lorsque le siège se retrouve dans les positions transversales les plus éloignées du deuxième point d'ancrage inférieur, le siège peut préférentiellement comprendre un renvoi de sangle positionné au dessus de ce deuxième point d'ancrage et solidarisé au niveau du premier support.

Selon un autre aspect de l'invention, un véhicule à moteur est caractérisé en ce qu'il comprend au moins un siège, tel que décrit ci-dessus.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue en perspective latérale gauche d'un siège selon la première forme de réalisation de l'invention ;
- la Figure 2 représente une vue avant du siège selon la Figure 1 ;
- la Figure 3 représente une vue en perspective latérale droite du siège de la première forme de réalisation ; et
- la Figure 4 représente une vue en perspective latérale droite de la deuxième forme de réalisation.

### EXPOSÉ DÉTAILLÉ DE MODES DE RÉALISATION PRÉFÉRÉS

Comme l'illustrent les Figures, un siège (1) comprend un dossier (2) et une assise (3). Dans la description qui suit, la direction longitudinale est appelée X, la direction transversale est appelée Y et la direction verticale est appelée Z, ces trois directions (X, Y et Z) étant orthogonales entre-elles. Le siège (1) est conçu de manière à pouvoir être déplacé dans les directions X et Y à l'intérieur de l'habitacle du véhicule.

Pour permettre son déplacement dans le sens transversal (Y) du véhicule, le siège (1) est monté sur (ou comprend) un premier support supérieur (4), par l'intermédiaire de l'assise (3). Le premier support (4) est monté sur un deuxième support inférieur (6). Le premier support supérieur (4) se déplace transversalement par rapport au deuxième support inférieur (6) grâce à un mécanisme de guidage transversal, présentant des glissières transversales (7) et des bras (8).

A titre d'exemple, le mécanisme utilisé comprend une paire de bras latéraux de support (8), de longueurs variables, prévus de façon à s'allonger et à se rétrécir automatiquement lors d'un déplacement transversal du premier support supérieur (4) solidaire du siège (1). Chaque bras latéral de support (8) dispose d'une extrémité inférieure montée en étant articulée sur le deuxième support inférieur (6) et d'une extrémité supérieure montée en étant articulée sur cette première structure de support (4) avec respectivement deux points d'attache supérieurs.

Pour permettre son déplacement dans le sens longitudinal (X) du véhicule, le deuxième support inférieur (6) est solidarisé de manière à pouvoir coopérer en coulissant sur deux rails de guidage longitudinaux (9), qui sont solidarisés au plancher du véhicule.

Le système de ceinture de sécurité (11) inclut une sangle (12). Cette sangle (12) est attachée par sa première extrémité (13) à un premier point d'ancrage supérieur (14). Le premier point d'ancrage supérieur (14) est fixé au niveau de la partie supérieure (16) du dossier (2), vers son coin supérieur gauche. Le premier point d'ancrage supérieur (14) comporte un enrouleur-tendeur, de façon à donner au passager la longueur de sangle (12) nécessaire, et de façon à la garder, ou à la mettre sous tension en cas de choc. Le premier point d'ancrage supérieur (14) comporte également un dispositif d'absorption d'effort (non représenté).

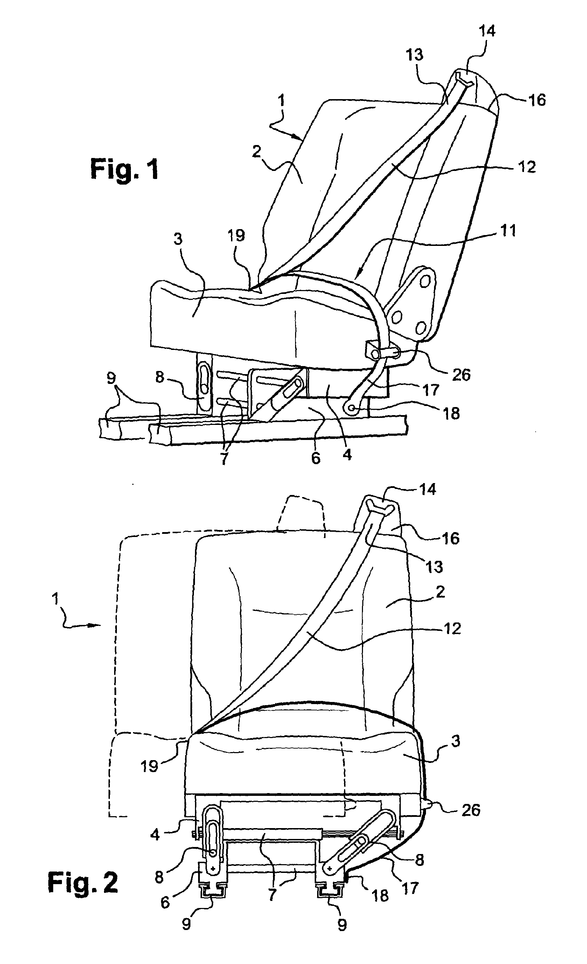

La sangle (12) est attachée par sa deuxième extrémité (17) à un deuxième point d'ancrage inférieur (18). Selon une première forme de réalisation avantageuse de l'invention (voir Figures 1 et 2), le deuxième point d'ancrage inférieur (18) est solidarisé au niveau du bord latéral du deuxième support inférieur (6). Le deuxième point d'ancrage inférieur (18) est situé verticalement du même côté que le premier point d'ancrage supérieur (14). Par ce positionnement, le deuxième point d'ancrage (18) ne se déplace que dans le sens longitudinal (X) par rapport au véhicule.

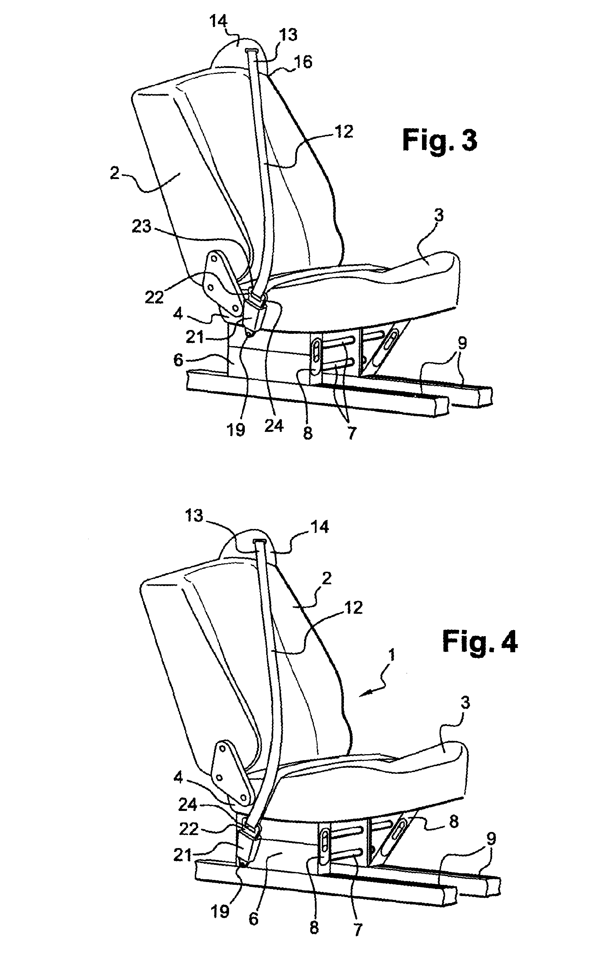

Pour permettre à la sangle (12) de passer à la fois sur le buste et sur le ventre du passager (voir Figures 2 à 4), un troisième point d'ancrage inférieur (19) est prévu du côté opposé au deuxième point d'ancrage inférieur (18). Ce troisième point d'ancrage (19) est formé par une gâche (21) recevant un pêne (22). Le pêne (22) comprend un corps (23) avec une fente (24). La sangle (12) est reliée au pêne (22) en passant librement par la fente (24).

Dans cette forme de réalisation, le troisième point d'ancrage inférieur (19) est solidarisé au niveau du bord latéral du premier support supérieur (4). Par ce positionnement, le troisième point d'ancrage (19) se déplace dans les deux sens longitudinal (X) et transversal (Y) par rapport au véhicule.

Dans une deuxième forme de réalisation avantageuse, le troisième point d'ancrage inférieur (19) est solidarisé au niveau du bord latéral du deuxième support inférieur (6). Par ce positionnement, le troisième point d'ancrage (19) ne se déplace que dans le sens longitudinal (X).

Pour permettre un libre coulissement de la sangle (12), quel que soit le placement transversal du siège (indiqué en pointillés en Figure 2), un système de renvoi de sangle (26) est prévu en étant positionné au niveau du premier support (4). Ce système de renvoi (26) est composé par un ensemble d'axes ou de galets.

Ce déplacement du deuxième point d'ancrage (18) ou des deuxième (18) et troisième (19) points d'ancrage, pour les placer sur le deuxième support inférieur (6) pour les connecter mécaniquement aux rails (9) et au plancher du véhicule, permet de libérer des contraintes intervenant sur le premier support (4) et sur le mécanisme à glissières transversales (7) et bras (8) assurant le déplacement transversal (Y). En cas de chocs, les arrachements de l'assise (3) et du premier support (4) sont empêchés. Cette solution évite également de surdimensionner les pièces du premier support (4) et du mécanisme à glissières transversales (7) et bras (8) assurant le déplacement transversal (Y), pour les rendre plus résistantes. Des essais avec différents chocs, dont le plus défavorisant est celui connu sous l'appellation ECE14, a montré une bonne efficacité de reprise d'effort des deuxième et troisième points d'ancrage selon l'invention.

La présente invention n'est pas limitée aux modes de réalisation décrits et illustrés. De nombreuses modifications peuvent être réalisées, sans pour autant sortir du cadre défini par la portée du jeu de revendications.

## Revendications

1. Siège mobile, destiné à un véhicule automobile, comprenant un dossier (2) et une assise (3), monté sur un premier support (4), apte à être déplacé dans une direction transversale (Y) du véhicule, le premier support (4) étant monté sur un deuxième support (6), apte à être déplacé dans une direction longitudinale (X) du véhicule et immobile dans la direction transversale (Y) du véhicule, et intégrant un système de ceinture de sécurité (11), présentant une sangle (12), dont l'une des extrémités (13) est fixée à un premier point d'ancrage à enrouleur (14), solidarisé au niveau de la partie supérieure (16) du dossier (2) et dont l'autre des extrémités (17) est fixée à un deuxième point d'ancrage (18), et un pêne (22) dont le corps (23) est traversé de manière coulissante par la sangle (12) et est prévu pour être reçu de manière libérable dans une gâche (21) formant un troisième point d'ancrage (19), **caractérisé en ce que** l'un au moins des deuxième (18) et troisième (19) points d'ancrage est solidarisé au niveau du deuxième support (6) apte à être déplacé dans une direction longitudinale (X) du véhicule.

2. Siège selon la revendication 1, **caractérisé en ce que** le deuxième point d'ancrage (18) est solidarisé au niveau du deuxième support (6).

3. Siège selon la revendication 1 ou 2, **caractérisé en ce que** la gâche (21) formant le troisième point d'ancrage (19) est solidarisée au niveau du deuxième support (6).

4. Siège selon l'une quelconque des revendications précédentes, **caractérisé en ce qu'**il comprend un renvoi de sangle (26) positionné au dessus du deuxième point d'ancrage (18) et solidarisé au niveau du premier support (4).

5. Véhicule automobile, **caractérisé en ce qu'**il comprend au moins un siège (1) selon l'une quelconque des revendications précédentes.

## Claims

1. Movable seat, intended for a motor vehicle, comprising a backrest (2) and a seat cushion (3), mounted on a first support (4), able to be moved in a transverse direction (Y) of the vehicle, the first support (4) being mounted on a second support (6), able to be moved in a longitudinal direction (X) of the vehicle and which is immobile in the transverse direction (Y) of the vehicle, and which incorporates a seatbelt system (11) having a strap (12), of which one of the ends (13) is fixed to a first anchor point with a winder (14), secured near the upper part (16) of the backrest (2) and of which the other of the ends (17) is fixed to a second anchor point (18), and a buckle bolt (22) of which the body (23) has the strap (12) sliding through it, and is designed to be received releasably in a buckle (21) that forms a third anchor point (19), **characterized in that** at least one of the second (18) and third (19) anchor points is secured to the second support (6) able to be moved in a longitudinal direction (X) of the vehicle.

2. Seat according to Claim 1, **characterized in that** the second anchor point (18) is secured to the second support (6).

3. Seat according to Claim 1 or 2, **characterized in that** the buckle (21) that forms the third anchor point (19) is secured to the second support (6).

4. Seat according to any one of the preceding claims, **characterized in that** it comprises a belt strap runner (26) positioned above the second anchor point (18) and secured to the first support (4).

5. Motor vehicle, **characterized in that** it comprises at least one seat (1) according to any one of the preceding claims.

## Patentansprüche

1. Bewegbarer Sitz, der für ein Kraftfahrzeug bestimmt ist, eine Rückenlehne (2) und einen Sitzteil (3) aufweist und auf einem ersten Träger (4) angebracht ist, der in einer Querrichtung (Y) des Fahrzeugs verschoben werden kann, wobei der erste Träger (4) an einem zweiten Träger (6) angebracht ist, der in einer Längsrichtung (X) des Fahrzeugs verschoben werden kann und in der Querrichtung (Y) des Fahrzeugs unbeweglich ist, und der ein Sicherheitsgurtsystem (11) aufweist, das einen Gurt (12), von dem eines der Enden (13) an einem ersten Aufrollvorrichtungs-Verankerungspunkt (14) befestigt ist, der an dem oberen Teil (16) der Rückenlehne (2) fest angebracht ist, und von dem das andere der Enden (17) an einem zweiten Verankerungspunkt (18) befestigt ist, und einen Verschluss (22) enthält, dessen Körper (23) von dem Gurt (12) verschiebbar durchquert wird und zur freigebbaren Aufnahme in einem einen dritten Verankerungspunkt (19) bildenden Schließer (21) vorgesehen ist, **dadurch gekennzeichnet, dass** der zweite (18) und/oder der dritte (19) Verankerungspunkt an dem zweiten Träger (6) fest angebracht ist, der in einer Längsrichtung (X) des Fahrzeugs verschoben werden kann.

2. Sitz nach Anspruch 1, **dadurch gekennzeichnet, dass** der zweite Verankerungspunkt (18) an dem zweiten Träger (6) fest angebracht ist.

3. Sitz nach Anspruch 1 oder 2, **dadurch gekennzeichnet, dass** der Schließer (21), der den dritten Verankerungspunkt bildet, an dem zweiten Träger (6) fest angebracht ist.

4. Sitz nach einem der vorhergehenden Ansprüche, **dadurch gekennzeichnet, dass** er einen Gurtumlenkbeschlag (26) aufweist, der über dem zweiten Verankerungspunkt (18) positioniert und fest am ersten Träger (4) angebracht ist.

5. Kraftfahrzeug, **dadurch gekennzeichnet, dass** es mindestens einen Sitz (1) nach einem der vorhergehenden Ansprüche umfasst.
